# EUROPÄISCHE PATENTSCHRIFT

(11) **EP 2 570 069 B1**
(45) Veröffentlichungstag und Bekanntmachung des Hinweises auf die Patenterteilung: **22.02.2017**
(21) Anmeldenummer: 12401185.9
(22) Anmeldetag: 11.09.2012
(51) Int. Cl.: A47L 15/42, A47L 15/00

(54) **Verfahren zum Betreiben eines Spülautomaten mit einem Spülflotten-Speicherbehälter**
Method for operating a washing machine with a rinsing liquor storage container
Procédé de fonctionnement d'un automate de rinçage avec un récipient de stockage d'une eau de rinçage

(30) Priorität: 13.09.2011 DE 102011053545
(43) Veröffentlichungstag der Anmeldung: 20.03.2013
(73) Patentinhaber: Miele & Cie. KG, 33332 Gütersloh (DE)
(72) Erfinder: Hellweg, Markus, 33619 Bielefeld (DE); Kara, Carcus, 49152 Bad Essen (DE)

(56) Entgegenhaltungen:
- EP-A1- 2 327 349
- DE-A1- 19 629 806
- DE-A1-102008 040 653
- DE-C1- 10 059 112
- US-A1- 2011 146 716

## Beschreibung

Die Erfindung betrifft ein Verfahren zum Betreiben eines Spülautomaten mit einem Spülflotten-Speicherbehälter, wobei der Speicherbehälter separat von einem Spülbehälter des Spülautomaten ausgebildet ist, und wobei das Verfahren bedarfsweise ein Programm oder einen Programmabschnitt zur Reinigung des Speicherbehälters beinhaltet.

Aus dem Stand der Technik sind Spülautomaten mit einem Spülflotten-Speicherbehälter bekannt geworden. Ein solcher Speicherbehälter, auch Zwischenspeicherbehälter genannt, dient der Zwischenspeicherung von Spülflotte zum Zwecke der späteren Verwendung. Dies hilft Ressourcen, insbesondere Wasserressourcen, einzusparen, da hinsichtlich der zwischengespeicherten Spülflotte eine Mehrfach- bzw. Wiederverwendung stattfinden kann. Insbesondere die relativ saubere Klarspülflotte aus dem letzten wasserführenden Programmabschnitt eines Geschirrspülautoamten bietet sich zur Speicherung an, siehe auch DE 40 04 057 A1.

Aus Hygienegründen müssen Speicherbehälter von Zeit zu Zeit gereinigt werden. Es kann ansonsten zur unerwünschten Bildung und späteren Ausbreitung von Bakterien, Keimen oder dergleichen kommen. Aus dem Stand der Technik sind zahlreiche Verfahren zur Reinigung eines Speicherbehälters bekannt geworden. Insbesondere die WO 2010/010012 A1 offenbart ein Speicherbehälterreinigungsprogramm. Dieses ist entweder vom Benutzer auswählbar oder wird turnusmäßig als fester Bestandteil eines Spülprogramms durchgeführt. Bei der Einstellmöglichkeit des Programms durch den Benutzer kann die Durchführung vergessen werden. Bei einem turnusmäßigen Programmablauf wird die tatsächliche Keimbildung nicht berücksichtigt.

Aus der EP 2 327 349 A1 ist ein Verfahren zum Betreiben eines Spülautomaten mit einem Spülflotten-Speicherbehälter bekannt, bei dem eine Reinigung des Speicherbehälters erfolgt, wenn ein Sensor eine Verschmutzung erfasst, deren Verschmutzungsniveau einen vorgegebenen Schwellwert übersteigt.

Es ist die Aufgabe der Erfindung, ein Verfahren zum Betreiben eines Spülautomaten mit einem Spülflotten-Speicherbehälter anzugeben, das insbesondere unter dem Gesichtspunkt der sicheren Hygiene weitere Vorteile bietet.

Zur Lösung dieser Aufgabe wird mit der Erfindung ein Verfahren mit dem Merkmalen des unabhängigen Anspruchs 1 vorgeschlagen
Das erfindungsgemäße Verfahren sieht eine Reinigung des Speicherbehälters mit Spülflotte vor. Bevor eine solche Reinigung durchgeführt wird, erfolgt zunächst eine Prüfung auf Notwendigkeit der Reinigung. In einem der Speicherbehälterreinigung vorgeschalteten Prüfschritt wird also geprüft, d.h. kontrolliert, ob eine Reinigung des Speicherbehälters überhaupt erforderlich ist. Bejahendenfalls wird eine entsprechende Reinigung durchgeführt. Anderenfalls unterbleibt eine solche Reinigung. Die Prüfung auf Notwendigkeit der Reinigung wird anhand der Trübung der im Speicherbehälter befindlichen, das heißt zwischengespeicherten Flotte durchgeführt. Zu diesem Zweck wird in einem der eigentlichen Speicherbehälterreinigung vorgeschalteten Kontrollschritt die Trübung der gespeicherten Flotte gemessen.

Erfindungsgemäß wird die Trübung nach dem Entleeren der Flotte aus dem Speicherbehälter in den Spülbehälter mit einem Trübungssensor gemessen, welcher im Spülbehälter oder in einem den Spülbehälter enthaltenden Spülflottenkreislauf angeordnet ist. Es kann dann der Sensor verwendet werden, der bereits in dem Spülautomaten vorhanden ist und ansonsten zur Steuerung des eigentlichen Spülprogramms dient.

Es ist besonders vorteilhaft, dass die Messung der Trübung der Flotte in einem Sammeltopf im unteren Bereich des Spülbehälters durchgeführt wird. Dies geschieht dadurch, dass die im Speicherbehälter gespeicherte Flotte in den Spülbehälter des Spülautomaten durch Entleerung des Speicherbehälters entlassen wird. Die Flotte sammelt sich im Sammeltopf des Spülautomaten an. Hier befindet sich ein Trübungssensor, mit dessen Hilfe die Trübung der Speicherflotte gemessen werden kann. Die Messung kann aufgrund der günstigen Anordnung des Sensors zu Beginn eines Spülprogrammablaufs durchgeführt werden, ohne dass es einer Umwälzung der Flotte bedarf. Hierdurch wird einerseits vermieden, dass das Spülgut mit keimbelasteter Flotte in Kontakt kommt. Andererseits wird das Messergebnis nicht durch Verschmutzungen verfälscht, die vom Spülgut gelöst wurden. Ergibt diese Messung, dass eine zu starke Verschmutzung der gespeicherten Flotte gegeben ist, so lässt sich hieraus ableiten, dass auch eine Verschmutzung des Speicherbehälters vorliegt, weshalb es einer Reinigung desselben bedarf. Die Entscheidung, ein Programm oder einen Programmabschnitt zur Reinigung des Speicherbehälters durchzuführen, wird von der Gerätesteuerung dann getroffen, wenn ein gemessener Trübungswert T₀ einen vorgegebenen Vergleichswert Tₘₐₓ überschreitet. Die Trübung der dem Speicherbehälter entstammenden Speicherflotte dient mithin als Entscheidungskriterium für die Frage, ob eine Reinigung des Speicherbehälters durchgeführt werden soll oder nicht.

Ergibt sich infolge der Trübungsmessung indes, dass keine oder nur eine geringe Verschmutzung der Speicherflotte gegeben ist, so wird keine Speicherbehälterreinigung durchgeführt, da aufgrund der nicht oder nur wenig verschmutzten Speicherflotte die Annahme gerechtfertigt ist, dass der Speicherbehälter nicht in einer solchen Weise verschmutzt ist, als dass eine Reinigung erforderlich wäre.

Um zu vermeiden, dass es bei einer Messung der Trübung der Speicherflotte zu verfälschten Messergebnissen kommt, kann vor dem Entleeren der Flotte aus dem Speicherbehälter in den Spülbehälter eventuell im Spülbehälter vorhandene Flotte entleert werden. Auf diese Weise wird verhindert, dass im Spülbehälter des Spülautomaten unter Umständen noch vorhandene Restflüssigkeit mit Speicherflotte vermischt wird, was dann im Ergebnis zu einer verfälschten Messung mit der Konsequenz führen könnte, dass eine Speicherbehälterreinigung durchgeführt wird, obgleich dies noch gar nicht erforderlich wäre.

In einer ersten Variante des erfindungsgemäßen Verfahrens wird nach dem Erkennen der Notwendigkeit einer Speicherbehälterreinigung die gespeicherte, keimbelastete Flotte aus dem Spülbehälter entleert und anschließend Frischwasser zugeführt. Dem Frischwasser wird Reiniger zugesetzt, und die so entstandene Spülflotte wird auf eine Temperatur von mindestens 50°C, vorzugsweise mindestens 65°C erhitzt. Dabei kann, insbesondere wenn ein Durchlauferhitzer verwendet wird, eine Umwälzung der Spülflotte erfolgen.

Nach dem Erhitzen sind bei dieser Variante zwei Optionen möglich. In der ersten Option wird nach dem Erhitzen der Spülflotte diese in den Speicherbehälter zu dessen Reinigung eingeleitet. Hierdurch ergibt sich der Vorteil, dass die Speicherbehälterreinigung mit einer relativ sauberen und heißen Spülflotte durchgeführt werden kann.

Eine zweite Option ist dadurch gekennzeichnet, dass mit der Spülflotte vor dem Programmabschnitt zur Reinigung des Speicherbehälters ein herkömmlicher Reinigungsprogrammabschnitt im Spülbehälter durchgeführt wird. Dadurch wird Wasser eingespart, weil mit der gleichen Flotte sowohl das Spülgut als auch der Speicherbehälter gereinigt wird.

In einer zweiten Variante wird vor dem Programmabschnitt zur Reinigung des Speicherbehälters der Flotte aus dem Speicherbehälter Frischwasser zugesetzt und ein herkömmlicher Reinigungsprogrammabschnitt im Spülbehälter durchgeführt. Hierdurch wird einerseits Wasser eingespart, andererseits wird die Speicherbehälterreinigung mit einer relativ sauberen und heißen Spülflotte durchgeführt. Es muss allerdings in Kauf genommen werden, dass der Reinigungsprogrammabschnitt mit leicht verkeimter Flotte durchgeführt wird.

Der Spülflotten-Speicherbehälter wird gemäß einem weiteren Merkmal der Erfindung dadurch gereinigt, dass die Spülflotte während des Programms oder des Programmabschnitts zur Reinigung des Speicherbehälters in diesem für eine vorgebbare Einwirkzeitdauer verbleibt. Alternativ oder zusätzlich kann der Speicherbehälter während des Programms oder des Programmabschnitts zu seiner Reinigung mehrfach durchgespült werden.

Der Speicherbehälter kann gemäß einem weiteren Merkmal der Erfindung mehrfach durchgespült werden. Darüber hinaus kann die Spülflotte in dem Speicherbehälter für eine vorgebbare Einwirkzeitdauer verbleiben. Auch hierdurch kann eine Verbesserung des Reinigungsergebnisses erreicht werden. Nach dem Programm oder Programmabschnitt zur Reinigung des Speicherbehälters ist es sinnvoll, wenn die Flotte entleert wird, weil sie stark mit Keimen und Bakterien aus dem Speicherbehälter belastet ist.

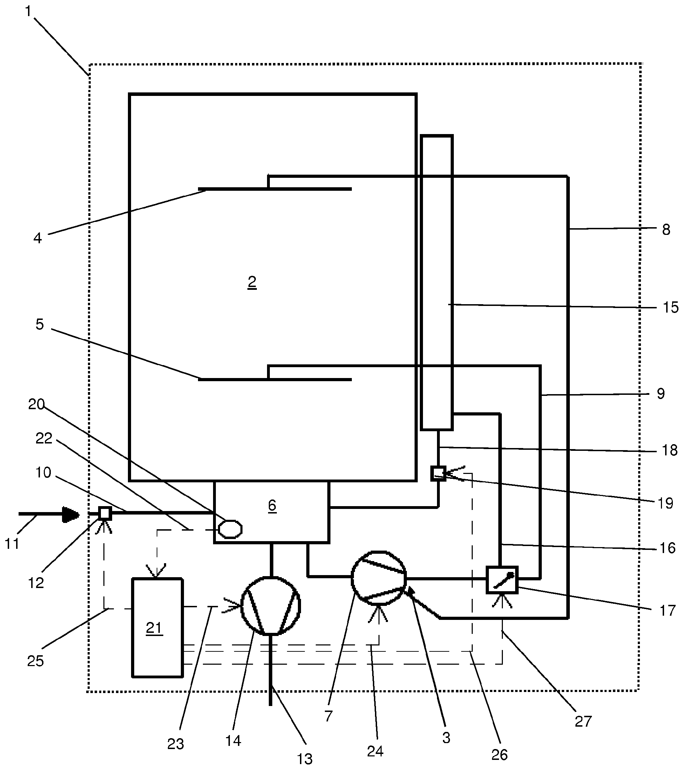

Weitere Merkmale und Vorteile der Erfindung ergeben sich aus der nachfolgenden Beschreibung anhand der Figur. Diese zeigt in schematischer Darstellung einen Spülautomaten 1. Dieser verfügt über einen Spülbehälter 2, der den eigentlichen Spülraum bereitstellt. Innerhalb des Spülbehälters 2 können verfahrbar angeordnete und in der Figur nicht näher dargestellte Geschirrkörbe bzw. Besteckschubladen zur Aufnahme von zu reinigendem Geschirr bzw. zu reinigenden Besteckteilen angeordnet sein.

Zum Zwecke des Auftrages von Spülflüssigkeit, der sogenannten Spülflotte auf zu reinigendes Geschirr und/oder zu reinigende Besteckteile verfügt der Geschirrspülautomat 1 über im Spülbehälter 2 angeordnete Sprüharme 4 und 5. Je nach Ausgestaltung des Spülautomaten 1 können auch mehr als nur zwei Sprüharme 4 und 5 vorgesehen sein.

Ausgehend von einem Sammeltopf 6 des Spülautomaten 1 sind die Sprüharme 4 und 5 jeweils an Zuleitungen 8 und 9 angeschlossen. Es ist ferner eine Umwälzpumpe 7 vorgesehen, wie in der schematischen Darstellung zu erkennen. Die Spülflotte sammelt sich im Sammeltopf 6 an. Von hier aus wird sie mittels der Umwälzpumpe 7 angesogen und über die Zuleitungen 8 und 9 zu den Sprüharmen 4 bzw. 5 geleitet. Von hieraus gelangt die Spülflotte auf das zu reinigende Geschirr bzw. auf die zu reinigenden Besteckteile. Sie sammelt sich dann anschließend wieder im Sammeltopf 6 und es erfolgt eine erneute Umwälzung. Die beiden Sprüharme 4 und 5 können parallel betrieben werden, vorzugsweise werden sie jedoch abwechselnd mit Spülflotte versorgt. Hierzu ist dann ein Verteiler 3 notwendig, beispielsweise eine in den Zeichnungen nicht dargestellte Wasserweiche, welche in der Umwälzpumpe 7 integriert sein kann.

Der Sammeltopf 6 ist an eine Frischwasserleitung 10 angeschlossen. In Richtung des Pfeils11 kann über diese Frischwasserleitung 10 Frischwasser in den Sammeltopf 6 und damit in den Spülbehälter 2 des Spülautomaten 1 eingespeist werden. Hierzu ist in der Frischwasserleitung 10 ein Zulaufventil 12 angeordnet.

Der Sammeltopf 6 ist ferner an eine Abwasserleitung 13 angeschlossen. Mittels einer dafür vorgesehenen Entleerungspumpe 14 kann die Spülflotte aus dem Sammeltopf 6 und damit aus dem Spülbehälter 2 des Spülautomaten 1 entleert und über die Abwasserleitung 13 zwecks Entsorgung abgeführt werden.

Der Geschirrspülautomat 1 verfügt desweiteren über einen Spülflotten-Speicherbehälter 15. Dieser ist im gezeigten Ausführungsbeispiel vom Spülbehälter 2 und damit insbesondere vom Sammeltopf 6 separat ausgeführt. Über eine Zuleitung 16 ist der Speicherbehälter 15 unter Zwischenschaltung eines Zweiwegeventils 17 an die Umwälzpumpe 7 angeschlossen.

Soll zum Zwecke der Zwischenspeicherung Spülflotte in den Speicherbehälter 15 geführt werden, so ist das Zweiwegeventil 17 in die entsprechende Stellung zu bringen. Die von der Umwälzpumpe 7 umgewälzte Spülflotte gelangt dann über die Zuleitung 16 in den Speicherbehälter 15. Hier kann sie bis zur weiteren Verwendung in einem nachfolgenden Spülprogramm gespeichert werden.

Zum Zwecke der Rückführung der zwischengespeicherten Flotte ist zwischen dem Speicherbehälter 15 und dem Sammeltopf 6 eine Abflussleitung 18 angeordnet. In der Leitung 18 ist ein Ablaufventil 19 angeordnet. Die im Speicherbehälter 15 zwischengespeicherte Spülflotte kann dann bei geöffnetem Ablaufventil 19 über die Abflussleitung 18 in den Sammeltopf 6 des Spülautomaten 1 strömen. Sobald diese Spülflottenrückführung abgeschlossen ist, wird das Ablaufventil 19 geschlossen und es kann dann in gewohnter Weise eine Umwälzung der Spülflotte durch die Umwälzpumpe 7 vorgenommen werden, infolge dessen die Spürharme 4 und 5 mit Spülflotte beschickt werden.

Von Zeit zu Zeit bedarf es einer Reinigung des Speicherbehälters 15, um die unerwünschte Ausbreitung von Bakterien, Keimen und/oder dergleichen zu vermeiden. Zu diesem Zweck ist erfindungsgemäß vorgesehen, dass ein Programm oder ein Programmabschnitt zur Reinigung des Speicherbehälters 15 mittels Spülflotte stattfindet. Eine solche Reinigung findet immer dann statt, wenn eine Verschmutzung und/oder Verkeimung des Speicherbehälters sensorisch ermittelt wird. Hierzu ist im Sammeltopf 6 ein Trübungssensor 20 angeordnet, wobei eine Verfahrensdurchführung in Abhängigkeit von der Trübung der von dem Spülflotten-Speicherbehälter 15 bereitgestellten Flotte durchgeführt wird. Durch die Anordnung des Trübungssensors 20 im Sammeltopf 6, d. h. im Spülbehälter 2 des Spülautomaten 1, kann dieser auch zur verschmutzungsabhängigen Steuerung anderer Programmabschnitte herangezogen werden. Der Aufbau und die Arbeitsweise eines solchen Sensors sind beispielsweise aus der DE 100 59 112 C1 bekannt und deshalb hier nicht näher beschrieben.

Ein weiteres Bauteil des dargestellten Spülautomaten ist eine vorzugsweise elektronische Gerätesteuerung 21, welche über eine Datenleitung 22 die Messwerte des Trübungssensors 20 erfasst und über Steuerleitungen 23 bis 27 Verbraucher wie die Pumpen 7 und 14 oder die Ventile 12, 17 und 19 schaltet.

Die erfindungsgemäße Verfahrensdurchführung ist im Folgenden anhand von drei verschiedenen Programmabläufen beschrieben, welche jeweils das erfindungsgemäße Verfahren zum Betreiben eines Spülautomaten beinhalten.

### Gemeinsamer Teil

Bei allen Programmalternativen ist davon auszugehen, dass der Speicherbehälter mit Klarspülflotte aus einem der vorhergehenden Programmabläufe gefüllt ist. Zum Programmstart wird diese gespeicherte Flotte jeweils durch Öffnen des Ablaufventils 19 vom Speicherbehälter 15 in den Spülbehälter 2 eingelassen. Nach dem Entleeren des Speicherbehälters (zeit- oder füllstandsgesteuert) erfolgt eine Messung der Trübung T₀ durch den Trübungssensor 20. Vor und während der Messung wird die Flotte vorzugsweise nicht umgewälzt. Der Trübungssensor 20 sollte sich deshalb im Sammeltopf 6 des Spülautomaten befinden. Nach der Messung wird der Trübungswert T₀ von der Gerätesteuerung 21 mit einem vorgegebenen Vergleichswert Tₘₐₓ verglichen. Falls der gemessene Trübungswert T₀ nicht größer als der Vergleichswert Tₘₐₓ ist, wird das Programm wie herkömmlich fortgesetzt. Andernfalls folgt eine der nachstehenden Alternativ-Programmabläufe, welche einen Programmabschnitt zur Reinigung des Speicherbehälters 15 beinhalten.

### 1. Alternative: Gespeicherte Flotte verwerfen - Speicherbehälter 15 reinigen - Spülgut reinigen

Die gesamte Flotte, die aus dem Speicherbehälter 15 in den Spülbehälter 2 abgelassen wurde, wird durch Betreiben der Entleerungspumpe 14 aus dem Spülbehälter 2 entleert. Anschließend wird das Zulaufventil 12 geöffnet und Frischwasser eingelassen. Dem Frischwasser wird Reiniger zugegeben, die so entstandene Spülflotte wird umgewälzt und auf mindestens 50°C, vorzugsweise 65°C erhitzt. Anschließend wird der Verteiler 3 in eine Stellung geschaltet, in der der untere Sprüharm 5 mit Wasser versorgt wird. Danach wird das Zweiwegeventil 17 in eine Stellung gebracht, in der nicht mehr die Zuleitung 9, sondern die Zuleitung 16 mit Flotte versorgt wird. Dadurch wird der Speicherbehälter 15 gefüllt (zeitgesteuert oder niveaugesteuert). Die aufgeheizte Flotte verbleibt für eine vorgebbare Einwirkzeitdauer im Speicherbehälter 15. Alternativ oder zusätzlich kann die Flotte mehrmals in den Speicherbehälter eingelassen und nach einer bestimmten Zeit wieder abgelassen werden. Dadurch werden Bakterien und Keime abgetötet und Bakterienbeläge an den Wänden des Speicherbehälters 15 gelöst. Im Anschluss an die Speicherbehälterreinigung wird die Flotte über die Abwasserleitung 13 entleert, neues Frischwasser in den Spülbehälter 2 eingelassen und das Programm mit einem Reinigungsprogrammabschnitt fortgesetzt.

### 2. Alternative: Gespeicherte Flotte verwerfen - Spülgut reinigen - Speicherbehälter 15 reinigen

Die gesamte Flotte, die aus dem Speicherbehälter 15 in den Spülbehälter 2 abgelassen wurde, wird durch Betreiben der Entleerungspumpe 14 aus dem Spülbehälter 2 entleert. Anschließend wird das Zulaufventil 12 geöffnet und Frischwasser eingelassen. Dem Frischwasser wird Reiniger zugegeben, die so entstandene Spülflotte wird umgewälzt und auf mindestens 50°C, vorzugsweise 65°C erhitzt. Es folgt eine Haltezeit, in der die Spülflotte weiter umgewälzt und auf das Spülgut aufgebracht wird. Dies entspricht einem herkömmlichen Reinigungsprogrammabschnitt. Nach der Haltezeit wird der Verteiler 3 in eine Stellung geschaltet, in der der untere Sprüharm 5 mit Wasser versorgt wird. Danach wird das Zweiwegeventil 17 in eine Stellung gebracht, in der nicht mehr die Zuleitung 9, sondern die Zuleitung 16 mit Flotte versorgt wird. Dadurch wird der Speicherbehälter 15 gefüllt (zeitgesteuert oder niveaugesteuert). Die aufgeheizte Flotte verbleibt für eine vorgebbare Einwirkzeitdauer im Speicherbehälter 15. Alternativ oder zusätzlich kann die Flotte mehrmals in den Speicherbehälter eingelassen und nach einer bestimmten Zeit wieder abgelassen werden. Dadurch werden Bakterien und Keime abgetötet und Bakterienbeläge an den Wänden des Speicherbehälters 15 gelöst. Im Anschluss an die Speicherbehälterreinigung wird die Flotte über die Abwasserleitung 13 entleert, neues Frischwasser in den Spülbehälter 2 eingelassen und das Programm mit einem Zwischenspülprogrammabschnitt fortgesetzt.

### 3. Alternative: Gespeicherte Flotte verdünnen - Spülgut reinigen - Gespeicherte Flotte verwerfen - Speicherbehälter 15 reinigen

Zu der gespeicherten Flotte, die sich nun im Spülbehälter befindet, wird eine vorbestimmte Menge an Frischwasser eingefüllt. Anschließend wird Reiniger zugegeben und die so entstandene Spülflotte umgewälzt und auf mindestens 50°C, vorzugsweise 65°C erhitzt. Es folgt eine Haltezeit, in der die Spülflotte weiter umgewälzt und auf das Spülgut aufgebracht wird. Dies entspricht einem herkömmlichen Reinigungsprogrammabschnitt. Danach wird die Spülflotte entleert und durch Frischwasser ersetzt. Es erfolgt eine erneute Reinigerzugabe, Erhitzen auf 50 bis 65°C unter Umwälzung. Dann wird der Verteiler 3 in eine Stellung geschaltet, in der der untere Sprüharm 5 mit Wasser versorgt wird. Danach wird das Zweiwegeventil 17 in eine Stellung gebracht, in der nicht mehr die Zuleitung 9, sondern die Zuleitung 16 mit Flotte versorgt wird. Dadurch wird der Speicherbehälter 15 gefüllt (zeitgesteuert oder niveaugesteuert). Die aufgeheizte Flotte verbleibt für eine vorgebbare Einwirkzeitdauer im Speicherbehälter 15. Alternativ oder zusätzlich kann die Flotte mehrmals in den Speicherbehälter eingelassen und nach einer bestimmten Zeit wieder abgelassen werden. Dadurch werden Bakterien und Keime abgetötet und Bakterienbeläge an den Wänden des Speicherbehälters 15 gelöst. Im Anschluss an die Speicherbehälterreinigung wird die Flotte über die Abwasserleitung 13 entleert, neues Frischwasser in den Spülbehälter 2 eingelassen und das Programm mit einem Zwischenspülprogrammabschnitt fortgesetzt.

Die Abhängigkeit von der Trübung der vom Speicherbehälter bereitgestellten Flotte kann einzige Bedingung für die Speicherbehälterreinigung sein, sie kann aber auch von einer anderen Bedingung überlagert werden oder diese überlagern. So ist es beispielsweise vorstellbar, nach einer vorbestimmten Speicherdauer eine Zwangsreinigung durchzuführen. Alternativ kann zum Beispiel eine Reinigung nach einer Netzspannungsunterbrechung nur dann durchgeführt werden, wenn die gespeicherte Flotte eine bestimmte Trübung aufweist.

## Patentansprüche

1. Verfahren zum Betreiben eines Spülautomaten (1) mit einem Spülflotten-Speicherbehälter (15), wobei der Speicherbehälter (15) separat von einem Spülbehälter (2) des Spülautomaten (1) ausgebildet ist, und wobei das Verfahren bedarfsweise ein Programm oder einen Programmabschnitt zur Reinigung des Speicherbehälters (15) beinhaltet, **dadurch gekennzeichnet,**
**dass** das Programm oder der Programmabschnitt zur Reinigung des Speicherbehälters (15) in Abhängigkeit von der Trübung der vom Speicherbehälter (15) bereitgestellten Flotte durchgeführt wird,
und **dass** die Trübung nach dem Entleeren der Flotte aus dem Speicherbehälter (15) in den Spülbehälter (2) mit einem in einem Sammeltopf (6) im unteren Bereich des Spülbehälters (2) angeordneten Trübungssensor (20) gemessen wird, wobei die Trübung der Flotte zu Beginn eines Spülprogrammablaufs vor dem Umwälzen gemessen wird.

2. Verfahren nach mindestens einem der vorhergehenden Ansprüche,
**dadurch gekennzeichnet,**
**dass** mindestens ein gemessener Trübungswert (T₀) mit einem vorgegebenen Vergleichswert (Tₘₐₓ) verglichen wird, wobei im Falle der Überschreitung des Vergleichswertes (Tₘₐₓ) durch den gemessenen Trübungswert (T₀) das Programm oder der Programmabschnitt zur Reinigung des Speicherbehälters (15) durchgeführt wird.

3. Verfahren nach mindestens einem der vorhergehenden Ansprüche,
**dadurch gekennzeichnet,**
**dass** vor dem Entleeren der Flotte aus dem Speicherbehälter (15) in den Spülbehälter (2) eventuell im Spülbehälter (2) vorhandene Flotte entleert wird.

4. Verfahren nach Anspruch 2 oder 3,
**dadurch gekennzeichnet,**
**dass** vor einem Programmabschnitt zur Reinigung des Speicherbehälters (15) eine Entleerung der im Spülbehälter (2) vorhandenen Flotte erfolgt und anschließend Frischwasser in den Spülbehälter (2) zugeführt wird.

5. Verfahren nach Anspruch 4,
**dadurch gekennzeichnet,**
**dass** dem zugeführten Frischwasser im Spülbehälter (2) Reiniger zugesetzt wird und die so entstandene Spülflotte auf eine Temperatur von mindestens 50°C, vorzugsweise mindestens 65°C erhitzt wird, wobei während der Erhitzung gegebenenfalls eine Umwälzung der Spülflotte erfolgt.

6. Verfahren nach Anspruch 5,
**dadurch gekennzeichnet,**
**dass** nach dem Erhitzen der Spülflotte diese in den Speicherbehälter (15) zu dessen Reinigung eingeleitet wird.

7. Verfahren nach Anspruch 5,
**dadurch gekennzeichnet,**
**dass** mit der Spülflotte vor dem Programmabschnitt zur Reinigung des Speicherbehälters (15) ein herkömmlicher Reinigungsprogrammabschnitt im Spülbehälter (2) durchgeführt wird.

8. Verfahren nach Anspruch 2 oder 3,
**dadurch gekennzeichnet,**
**dass** vor dem Programmabschnitt zur Reinigung des Speicherbehälters (15) der Flotte aus dem Speicherbehälter (15) Frischwasser zugesetzt wird und ein herkömmlicher Reinigungsprogrammabschnitt im Spülbehälter (2) durchgeführt wird.

9. Verfahren nach mindestens einem der vorhergehenden Ansprüche,
**dadurch gekennzeichnet,**
**dass** die Spülflotte während des Programms oder des Programmabschnitts zur Reinigung des Speicherbehälters (15) in diesem für eine vorgebbare Einwirkzeitdauer verbleibt.

10. Verfahren nach mindestens einem der vorhergehenden Ansprüche,
**dadurch gekennzeichnet,**
**dass** der Speicherbehälter (15) während des Programms oder des Programmabschnitts zu seiner Reinigung mehrfach durchgespült wird.

11. Verfahren nach mindestens einem der vorhergehenden Ansprüche,
**dadurch gekennzeichnet,**
**dass** nach dem Programm oder Programmabschnitt zur Reinigung des Speicherbehälters (15) die Flotte entleert wird.

## Claims

1. Method for operating an automatic rinsing machine (1) comprising a rinsing solution storage container (15), the storage container (15) being separate from a rinsing container (2) of the automatic rinsing machine (1), and the method containing as required a programme or a programme portion for cleaning the storage container (15),
**characterised in that**
the programme or the programme portion for cleaning the storage container (15) is performed depending on the turbidity of the solution provided by the storage container (15), and **in that**, once the solution has been emptied from the storage container (15) into the rinsing container (2), the turbidity is measured by means of a turbidity sensor (20) arranged in a collecting vessel (6) in the lower region of the rinsing container (2), the turbidity of the solution being measured at the start of a rinsing programme cycle prior to circulation.

2. Method according to at least one of the preceding claims,
**characterised in that**
at least one measured turbidity value (T₀) is compared with a predetermined comparative value (Tₘₐₓ), the programme or the programme portion for cleaning the storage container (15) being performed if the measured turbidity value (T₀) exceeds the comparative value (Tₘₐₓ).

3. Method according to at least one of the preceding claims,
**characterised in that**
solution that may be in the rinsing container (2) is emptied before the solution is emptied from the storage container (15) into the rinsing container (2).

4. Method according to either claim 2 or claim 3,
**characterised in that**
the solution in the rinsing container (2) is emptied prior to a programme portion for cleaning the storage container (15), and fresh water is subsequently supplied to the rinsing container (2).

5. Method according to claim 4,
**characterised in that**
cleaning agent is added to the supplied fresh water in the rinsing container (2), and the rinsing solution thus formed is heated to a temperature of at least 50 °C, preferably at least 65 °C, the rinsing solution optionally being circulated during the heating.

6. Method according to claim 5,
**characterised in that**,
once the rinsing solution has been heated, it is introduced into the storage container (15) in order for said container to be cleaned.

7. Method according to claim 5,
**characterised in that**
a conventional cleaning programme portion is performed in the rinsing container (2) by means of the rinsing solution prior to the programme portion for cleaning the storage container (15).

8. Method according to either claim 2 or claim 3,
**characterised in that**
fresh water is added to the solution from the storage container (15) prior to the programme portion for cleaning the storage container (15), and a conventional cleaning programme portion is performed in the rinsing container (2).

9. Method according to at least one of the preceding claims,
**characterised in that**
the rinsing solution remains in the storage container for a predeterminable action duration during the programme or the programme portion for cleaning the storage container (15).

10. Method according to at least one of the preceding claims,
**characterised in that**
the storage container (15) is rinsed through a number of times during the programme or the programme portion in order for said container to be cleaned.

11. Method according to at least one of the preceding claims,
**characterised in that**
the solution is emptied after the programme or programme portion for cleaning the storage container (15).

## Revendications

1. Procédé destiné à faire fonctionner un appareil automatique de lavage (1) avec un réservoir de bain de lavage (15), dans lequel le réservoir (15) est constitué séparément d'une cuve de lavage (2) du appareil automatique de lavage (1), et dans lequel le procédé contient en cas de besoin un programme ou un segment de programme pour le nettoyage du réservoir (15),
**caractérisé en ce que**
le programme ou le segment de programme pour le nettoyage du réservoir (15) est réalisé en fonction de la turbidité du bain fourni par le réservoir (15),
et **en ce que** la turbidité est mesurée après le vidage du bain à partir du réservoir (15) dans la cuve de lavage (2) par l'intermédiaire d'un capteur de turbidité (20) disposé dans un pot collecteur (6) dans la zone inférieure de la cuve de lavage (2), dans lequel la turbidité du bain est mesurée au début d'un cycle de programme de lavage avant la circulation.

2. Procédé selon au moins l'une des revendications précédentes,
**caractérisé en ce que**
au moins une valeur de turbidité (T₀) mesurée est comparée avec une valeur de comparaison (Tₘₐₓ) prédéfinie, dans lequel, dans le cas du dépassement de la valeur de comparaison (Tₘₐₓ) par la valeur de turbidité (T₀) mesurée, le programme ou le segment de programme pour le nettoyage du réservoir (15) est réalisé.

3. Procédé selon au moins l'une des revendications précédentes,
**caractérisé en ce que**,
avant le vidage du bain à partir du réservoir (15) dans la cuve de lavage (2), le bain éventuellement présent dans la cuve de lavage (2) est vidé.

4. Procédé selon la revendication 2 ou 3,
**caractérisé en ce que**,
avant un segment de programme pour le nettoyage du réservoir (15), un vidage du bain présent dans la cuve de lavage (2) est effectué, et ensuite de l'eau fraîche est acheminée dans la cuve de lavage (2).

5. Procédé selon la revendication 4,
**caractérisé en ce que**
du produit nettoyant est ajouté à l'eau fraîche acheminée dans la cuve de lavage (2), et le bain de lavage ainsi réalisé est chauffé à une température d'au moins 50 °C, de préférence d'au moins 65 °C, dans lequel une circulation du bain de lavage est éventuellement effectuée pendant le chauffage.

6. Procédé selon la revendication 5,
**caractérisé en ce que**,
après le chauffage du bain de lavage, ce dernier est introduit dans le réservoir (15) pour le lavage de celui-ci.

7. Procédé selon la revendication 5,
**caractérisé en ce que**,
avec le bain de lavage, avant le segment de programme pour le nettoyage du réservoir (15), un segment de programme de nettoyage classique est effectué dans la cuve de lavage (2).

8. Procédé selon la revendication 2 ou 3,
**caractérisé en ce que**, avant le segment de programme pour le nettoyage du réservoir (15), de l'eau fraîche est ajoutée au bain à partir du réservoir (15), et un segment de programme de lavage classique est réalisé dans la cuve de lavage (2).

9. Procédé selon au moins l'une des revendications précédentes,
**caractérisé en ce que**,
pendant le programme ou le segment de programme pour le nettoyage du réservoir (15), le bain de lavage demeure dans ce réservoir pendant une durée d'action prédéfinie.

10. Procédé selon au moins l'une des revendications précédentes,
**caractérisé en ce que**, pendant le programme ou le segment de programme, le réservoir (15) est rincé plusieurs fois en vue de son nettoyage.

11. Procédé selon au moins une des revendications précédentes,
**caractérisé en ce que**,
après le programme ou le segment de programme pour le nettoyage du réservoir (15), le bain est vidé.
